# EUROPÄISCHE PATENTANMELDUNG

(11) **EP 2 775 174 A1**
(43) Veröffentlichungstag der Anmeldung: **10.09.2014**
(21) Anmeldenummer: 13189914.8
(22) Anmeldetag: 23.10.2013
(51) Int. Cl.: F16H 61/00, F16H 63/30

(54) **Hydraulische Stellvorrichtung für ein automatisches Kraftfahrzeuggetriebe**

(71) Anmelder: Metalsa Automotive GmbH, 51702 Bergneustadt (DE)
(72) Erfinder: Bogner, Dirk, 58313 Herdecke (DE); Hoerenbaum, Burkhard, 59457 Werl (DE); Ueberacker, Heiner, 58640 Iserlohn (DE)
(74) Vertreter: Kalkoff & Partner

(57) **Zusammenfassung**

Die Erfindung betrifft eine hydraulische Stellvorrichtung für ein automatisches Kraftfahrzeuggetriebe, insbesondere Doppelkupplungsgetriebe, mit einer zur Verstellung des Getriebes längs verschiebbaren Schaltstange mit an ihren gegenüberliegenden Enden angeordneten Kolbenabschnitten sowie einer Zylindereinheit mit zwei zur Aufnahme der Kolbenabschnitte ausgebildeten Zylinderräumen. Um eine Stellvorrichtung bereitzustellen, die einen einfachen und kostengünstigen Aufbau aufweist, ist vorgesehen, dass die Zylinderräume gegenüber einem zwischen den Zylinderräumen angeordneten Mittelbereich durch jeweils ein von einer Innenwandung der Zylindereinheit vorstehendes Dichtungselement abgegrenzt sind.

## Beschreibung

Die Erfindung betrifft eine hydraulische Stellvorrichtung für ein automatisches Kraftfahrzeuggetriebe, insbesondere Doppelkupplungsgetriebe, mit
- einer zur Verstellung des Getriebes längs verschiebbaren Schaltstange mit an ihren gegenüberliegenden Enden angeordneten Kolbenabschnitten sowie
- einer Zylindereinheit mit zwei zur Aufnahme der Kolbenabschnitte ausgebildeten Zylinderräume.

In manuell schaltbaren, wie auch in automatisierten Schaltgetrieben dienen Schaltstangen zur getriebeinternen Durchführung der erforderlichen Schaltvorgänge, d.h. dem Ein- und Auslegen der einzelnen Gangstufen. Aus dem Stand der Technik sind hydraulische Stellvorrichtungen für Kraftfahrzeuggetriebe der eingangs genannten Art bekannt, bei denen an einer Schaltstange ein in einem Zylindergehäuse geführter Stellzylinder angeordnet ist, wobei über eine Druckbeaufschlagung der Zylinderräume eine Verschiebung der Schaltstange erfolgen kann, so dass bspw. Schaltgabeln für einen Gangwechsel betätigt und positioniert werden können.

Durch eine Axialverschiebung der Schaltstangen im Fall einer hydraulischen Beaufschlagung der Kolbenabschnitte kann bspw. ein zugeordnete Schaltgabel eine Schaltmuffe in Richtung eines auf einer Getriebewelle drehbar gelagerten Gangzahnrades verschoben werden, wodurch der betreffende Gang eingelegt und die zugeordnete Getriebeübersetzung wirksam wird. Einer einzigen Schaltstange sind dabei zumeist zwei Gänge zugeordnet, die wechselseitig ein- und auslegbar sind.

Insbesondere bei wechselseitig arbeitenden Schaltstangen besteht jedoch das Problem, dass in der Regel zur Herstellung der Schaltstange zwei Stellkolben, sowie ein die Stellkolben verbindender Grundkörper erforderlich sind. Zur Abdichtung der Zylinderräume gegenüber einem Mittelbereich sind dabei zusätzlich Dichtungselemente an den Stellkolben erforderlich.

Hiervon ausgehend liegt der Erfindung die Aufgabe zugrunde, eine Stellvorrichtung bereitzustellen, die einen einfachen und kostengünstigen Aufbau aufweist. Die Erfindung löst die Aufgabe durch eine hydraulische Stellvorrichtung mit den Merkmalen des Anspruchs 1. Vorteilhafte Weiterbildungen der Erfindung sind in den abhängigen Ansprüchen angegeben.

Kennzeichnend für die erfindungsgemäße hydraulische Stellvorrichtung ist, dass die Zylinderräume gegenüber einem zwischen den Zylinderräumen angeordneten Mittelbereich durch jeweils ein von einer Innenwandung der Zylindereinheit vorstehendes Dichtelement abgegrenzt sind. Durch die Anordnung der Dichtungselemente an der Innenwandung der Zylindereinheit besteht die Möglichkeit, die Schaltstange in besonders einfacher Weise auszugestalten. Auf eine besondere Ausgestaltung der Kolbenabschnitte, bspw. der Stellkolben zur Aufnahme der Dichtelemente an der Schaltstange, kann bei der erfindungsgemäßen Stellvorrichtung verzichtet werden. Die Dichtelemente der erfindungsgemäßen Stellvorrichtung sind dabei derart an der Zylindereinheit angeordnet, dass sie von der Innenwandung der Zylindereinheit in den Innenraum vorstehen, wo sie abdichtend an der Schaltstange anliegen. Durch die Dichtelemente sind somit die mit Druck beaufschlagbaren Zylinderräume gegenüber einem Mittelbereich abgegrenzt, welcher sich zwischen den abgegrenzten, mit den Kolbenabschnitten der Schaltstange versehenen Zylinderräumen befindet. Die hydraulische Stellvorrichtung lässt sich besonders einfach sowie kostengünstig herstellen. Darüber hinaus kann die Montage derart erfolgen, dass keine Beschädigungen der Dichtelemente zu befürchten sind.

Die Anordnung der Dichtelemente an der Zylindereinheit kann grundsätzlich in beliebiger Weise erfolgen. So können die Dichtelemente bspw. an die Innenwandung der Zylindereinheit angeklebt sein. Nach einer besonders vorteilhaften Ausgestaltung der Erfindung ist jedoch vorgesehen, dass das Dichtelement in einer Vertiefung der Innenwandung angeordnet ist. Eine entsprechende Ausgestaltung der Erfindung ermöglicht eine besonders einfache Montage der Dichtelemente und gewährleistet darüber hinaus eine zuverlässige Lagesicherung im Betrieb der Stellvorrichtung. Als Dichtelemente können bspw. Ringdichtungen verwendet werden, welche in eine bspw. vorzusehende umlaufende Nut an der Innenwandung der Zylindereinheit eingesetzt sind.

Nach einer weiteren Ausgestaltung der Erfindung ist ferner vorgesehen, dass die Zylindereinheit jeweils eine sich in die Zylinderräume erstreckende Leckageöffnung aufweist. Über einen derartigen Leckagekanal, welcher bspw. durch eine sich durch die Wandung der Zylinderkörper erstreckende Bohrung gebildet sein kann, können bei einer schaltungsbedingten Druckbefüllung eines der beiden Zylinderräume schlagartige Druckanstiege vermieden werden. Darüber hinaus können durch die Leckagekanäle in den Zylinderräumen befindliche Luftblasen entfernt werden, wodurch sich ein schnelles Ansprechverhalten und eine hohe Präzision der Schaltstangenbetätigung und somit der Schaltvorgänge des Schaltgetriebes realisieren lässt.

Die Ausgestaltung der Zylindereinheit ist grundsätzlich frei wählbar. Nach einer besonders vorteilhaften Ausgestaltung der Erfindung ist die Zylindereinheit jedoch einstückig ausgebildet, insbesondere aus einem hohlzylindrischen Körper gebildet. Diese Ausgestaltung der Zylindereinheit lässt sich besonders einfach und kostengünstig herstellen. Insbesondere die Möglichkeit, die Zylindereinheit mit einem kreisförmigen Querschnitt auszugestalten, erlaubt die Verwendung standardisierter Rohbauteile zur Herstellung der Zylindereinheit, was eine besonders kostengünstige Herstellung der Stellvorrichtung ermöglicht.

Nach einer Weiterbildung der Erfindung ist ferner vorgesehen, dass die Zylindereinheit im Bereich der Zylinderräume außenseitig umlaufend angeordnete Ringdichtungen aufweist. Derartige Ringdichtungen, die ebenfalls in entsprechenden Nuten an der Außenseite der Zylindereinheit angeordnet sein können, ermöglichen es in besonders einfacher Weise, die Zylindereinheit druckdicht mit entsprechenden Anbauteilen zu verbinden. Auf zusätzliche Dichtungsmaßnahmen kann bei dieser Ausgestaltung der Erfindung verzichtet werden.

Nach einer besonders vorteilhaften Ausgestaltung der Erfindung ist ferner vorgesehen, dass die Kolbenabschnitte einstückig mit der Schaltstange ausgebildet sind. Diese Ausgestaltung der Erfindung steigert die Möglichkeit zur Reduzierung der Herstellungskosten der hydraulischen Stellvorrichtung. Auf die Ausgestaltung der Schaltstange mit bspw. zwei separaten Stellkolben und einem die Stellkolben verbindenden Grundkörper, kann gemäß dieser Ausgestaltung der Erfindung verzichtet werden. Die Schaltstange kann bspw. durch einen standardisierten Körper gebildet sein, dessen Endbereiche die Kolbenabschnitte der Schaltstange bilden.

Besonders vorteilhafter Weise ist dabei vorgesehen, dass die Schaltstange aus einem zylindrischen Körper mit in Längsachsenrichtung gleichbleibendem Querschnitt gebildet ist. Bei dieser Ausgestaltung der Erfindung kann auf eine umfangreiche Herstellung der Schaltstange verzichtet werden. Die Endbereiche des zylindrischen Körpers bilden die Kolbenabschnitte, wohingegen der Mittelbereich den die Kolbenabschnitte verbindenden Bereich bildet. Zur Abdichtung der Hohlräume gegenüber dem Mittelbereich liegen dabei die Dichtelemente an der Außenseite des zylindrischen Körpers an.

Die Anbindung der Schaltstange an das Getriebe zur Übertragung der Schaltstangenbewegung kann grundsätzlich in beliebiger Weise erfolgen. Nach einer besonders vorteilhaften Ausgestaltung der Erfindung weist die Schaltstange jedoch eine Aufnahmeöffnung zur Anordnung eines mit dem Getriebe verbindbaren Stellelements auf. Die Aufnahmeöffnung ermöglicht eine besonders einfache und zuverlässige Anordnung des Stellelements, so dass teilweise auf anderweitige Befestigungsmaßnahmen verzichtet werden kann.

Ein Ausführungsbeispiel der Erfindung wird nachstehend mit Bezug auf die Zeichnung erläutert. In der Zeichnung zeigt:

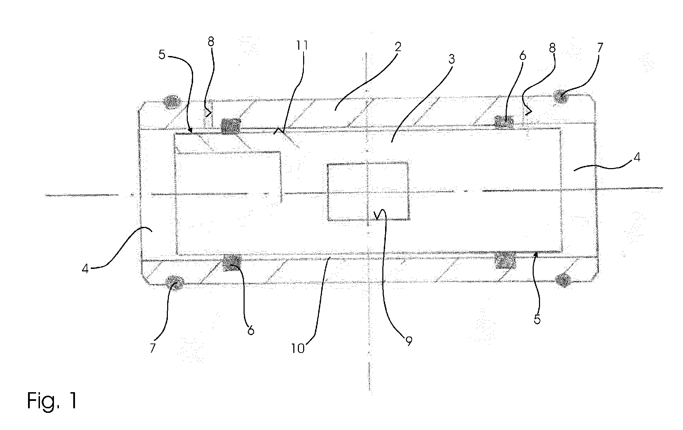

- Fig. 1: eine Ansicht eines Schnitts einer Stellvorrichtung.

In Fig. 1 ist eine Ansicht eines Schnitts einer Stellvorrichtung 1 dargestellt. Die Stellvorrichtung 1 weist dabei eine Zylindereinheit 2 auf, welche aus einem hohlzylindrischen Körper gebildet ist. Innerhalb der Zylindereinheit 2 ist eine Schaltstange 3 in dessen Längsachsenrichtung verschiebbar gelagert. Die Schaltstange 3 ist dabei aus einem zylindrischen Körper gebildet, dessen Endbereiche die Kolbenabschnitte 5 der Schaltstange 2 bilden, welche innerhalb von mit Druck beaufschlagbaren Zylinderräumen 4 der Zylindereinheit 2 befindlich sind.

Zur Abdichtung der Zylinderräume 4 gegenüber einem Mittelbereich 10, welcher zwischen den Zylinderräumen 4 angeordnet ist, dienen dabei Dichtelemente 6, welche in einer Vertiefung in der Innenwandung 11 der Zylindereinheit 2 angeordnet sind. Die Dichtelemente 6 ragen von der Innenwandung 11 der Zylindereinheit 2 vor und liegen an einer Außenseite der Schaltstange 3 im Bereich der Kolbenabschnitte 5 an der Schaltstange 3 an.

Die Zylindereinheit 2 weist ferner im Bereich der Zylinderräume 4 außenseitig angeordnete Ringdichtungen 7 auf, welche eine druckdichte Anordnung der Zylindereinheit 2 an einem Anbauteil ermöglichen. Zudem weist die Zylindereinheit 2 in die Zylinderräume 4 hineinreichende Leckageöffnungen 8 auf, welche einen schlagartigen Druckanstieg innerhalb der Zylinderräume 4 im Falle einer Druckbeaufschlagung verhindern.

Zur Anbindung der Stellvorrichtung 1 an ein Getriebe, nämlich zur Übertragung der Bewegung der Schaltstange 3, weist diese eine Aufnahmeöffnung 9 auf, welche zur Verbindung mit einem hier nicht dargestellten Stellelement ausgebildet ist.

### Bezugszeichenliste

- 1: Stellvorrichtung
- 2: Zylindereinheit
- 3: Schaltstange
- 4: Zylinderraum
- 5: Kolbenabschnitt
- 6: Dichtelement
- 7: Ringdichtung
- 8: Leckageöffnung
- 9: Aufnahmeöffnung
- 10: Mittelbereich
- 11: Innenwandung

## Patentansprüche

1. Hydraulische Stellvorrichtung für ein automatisches Kraftfahrzeuggetriebe, insbesondere Doppelkupplungsgetriebe, mit
- einer zur Verstellung des Getriebes längs verschiebbaren Schaltstange (3) mit an ihren gegenüberliegenden Enden angeordneten Kolbenabschnitten (5) sowie
- einer Zylindereinheit (2) mit zwei zur Aufnahme der Kolbenabschnitte (5) ausgebildeten Zylinderräumen(4)
**dadurch gekennzeichnet, dass**
die Zylinderräume (4) gegenüber einem zwischen den Zylinderräumen (4) angeordneten Mittelbereich (10) durch jeweils ein von einer Innenwandung (11) der Zylindereinheit (2) vorstehendes Dichtungselement (6) abgegrenzt sind.

2. Hydraulische Stellvorrichtung nach Anspruch 1, **dadurch gekennzeichnet, dass** das Dichtelement (6) in einer Vertiefung der Innenwandung (11) angeordnet ist.

3. Hydraulische Stellvorrichtung nach Anspruch 1 oder 2, **dadurch gekennzeichnet, dass** die Zylindereinheit (2) jeweils eine sich in den Zylinderräumen (4) erstreckende Leckageöffnung (8) aufweist.

4. Hydraulische Stellvorrichtung nach einem der vorhergehenden Ansprüche, **dadurch gekennzeichnet, dass** die Zylindereinheit (2) einstückig, insbesondere aus einem hohlzylindrischen Körper gebildet ist.

5. Hydraulische Stellvorrichtung nach einem der vorhergehenden Ansprüche, **dadurch gekennzeichnet, dass** die Zylindereinheit (2) im Bereich der Zylinderräume (4) außenseitig umlaufend angeordnete Ringdichtungen (7) aufweist.

6. Hydraulische Stellvorrichtung nach einem der vorhergehenden Ansprüche, **dadurch gekennzeichnet, dass** die Kolbenabschnitte (5) einstückig mit der Schaltstange (3) ausgebildet sind.

7. Hydraulische Stellvorrichtung nach einem der vorhergehenden Ansprüche, **dadurch gekennzeichnet, dass** die Schaltstange (3) aus einem zylindrischen Körper mit in Längsrichtung gleich bleibendem Querschnitt gebildet ist.

8. Hydraulische Stellvorrichtung nach einem der vorhergehenden Ansprüche, **dadurch gekennzeichnet, dass** die Schaltstange (3) eine Aufnahmeöffnung (9) zur Anordnung eines mit dem Getriebe verbindbaren Stellelements aufweist.
